# FASCICULE DE BREVET EUROPEEN

(11) **EP 0 799 774 B1**
(45) Date de publication et mention de la délivrance du brevet: **02.09.1998**
(21) Numéro de dépôt: 97400705.6
(22) Date de dépôt: 27.03.1997
(51) Int. Cl.: B65D 85/52, B65D 25/28, G09F 3/06, A01G 9/02, B65D 25/20, B65D 25/22

(54) **Dispositif pour la fixation de moyens de portage et/ou d'identification**
Vorrichtung zur Befestigung von Trag- und/oder Identifizierungsmitteln
Device for fixing transporting and/or identification means

(30) Priorité: 05.04.1996 FR 9604551
(43) Date de publication de la demande: 08.10.1997
(73) Titulaire: SOPARCO S.A., F-61110 Remalard (FR)
(72) Inventeur: Cohu, Philippe, 61110 Bretoncelles (FR)
(74) Mandataire: de Saint-Palais, Arnaud Marie

(56) Documents cités:
- EP-A- 0 502 281
- WO-A-93/19446
- AU-B- 536 410
- FR-A- 2 642 266

## Description

La présente invention a pour objet un dispositif pour la fixation de moyens de portage et/ou d'identification sur des récipients, selon le préambule de la revendication 1, tels que, par exemple, des pots en matière plastique destinés au conditionnement de plantes horticoles.

Elle concerne plus particulièrement des moyens de portage et/ou d'identification se présentant au moins partiellement sous la forme d'une bande flexible en matière semi-rigide (par exemple en matière plastique) élastiquement déformable à la flexion.

Pour assurer la fixation d'une bande de ce type à la partie supérieure du récipient, on a déjà proposé, par le brevet européen No 0 502 281 au nom de la Demanderesse, de conformer la bande de manière à ce qu'elle présente, d'un côté, une forme en pointe délimitée par deux bords obliques présentant deux encoches respectives, symétriques par rapport au plan bissecteur de la pointe.

Cette forme en pointe est destinée à venir s'engager jusqu'à hauteur des encoches dans une fente réalisée dans un épaulement ou rebord de la partie supérieure du récipient.

Cette fente, de même que la forme en pointe, sont conformées de manière à ce que les bordures latérales de la forme en pointe soient déformées élastiquement par les parties latérales de la fente jusqu'à ce que les encoches atteignent le niveau de la fente et qu'ensuite, en raison de la présence desdites encoches, les bordures latérales reprennent leur forme initiale en bloquant axialement le support dans la fente.

Cette solution qui s'avère particulièrement avantageuse, souffre cependant d'un léger inconvénient relatif à la sécurité de la fixation obtenue. En effet, le verrouillage de la bande s'effectue au niveau de deux zones latérales de faible largeur. Sous l'effet d'un effort de traction important exercé sur la bande, ces deux bandes latérales peuvent donc se déformer, voire s'arracher partiellement en provoquant un déverrouillage. En outre, la présence des encoches latérales autorise un mouvement de la bande dans le plan de la fente, mouvement susceptible d'engendrer des contraintes de cisaillement pouvant provoquer le déverrouillage de l'étiquette.

Le document WO 9319446 A décrit un dispositif correspondant au préambule de la revendication 1, qui toutefois ne permet pas l'usage de moyens de portage et/ou d'identification plats (bandes planes).

L'invention a donc plus particulièrement pour but d'améliorer la sécurité du verrouillage de la bande tout en conservant la simplicité et la facilité de mise en oeuvre de la solution précédemment évoquée.

Elle propose, à cet effet, un dispositif de fixation correspondant à la partie caractérisante de la revendication 1. De préférence, l'encoche transversale rectangulaire, est réalisée dans la partie centrale de la bande, de préférence au niveau de la jonction entre ladite forme rétrécie et le reste de la bande. Avantageusement, la fente est réalisée sur une partie horizontale du récipient (épaulement ou rebord de la partie supérieure du récipient).

On constate que ce type de verrouillage s'avère particulièrement efficace et difficile à violer.

Avantageusement, le rebord du récipient dans lequel est réalisée la fente pourra comprendre au niveau de sa face inférieure, une rainure reliant les deux extrémités rectilignes de la fente, de manière à maintenir le bord inférieur de l'encoche en position verrouillée et donc à s'opposer à toute tentative de déverrouillage.

Un mode d'exécution de l'invention sera décrit ci-après, à titre d'exemple non limitatif, avec référence aux dessins annexés dans lesquels :
La figure 1 est une vue schématique, en perspective, de la partie supérieure d'un pot présentant un épaulement sur lequel on a réalisé des fentes sensiblement en forme de créneau ;
La figure 2 montre une bande disposée en regard d'une fente du type de celles représentées sur la figure 1 ;
La figure 3 est une coupe axiale partielle schématique montrant la rainure pratiquée sous le rebord du récipient.

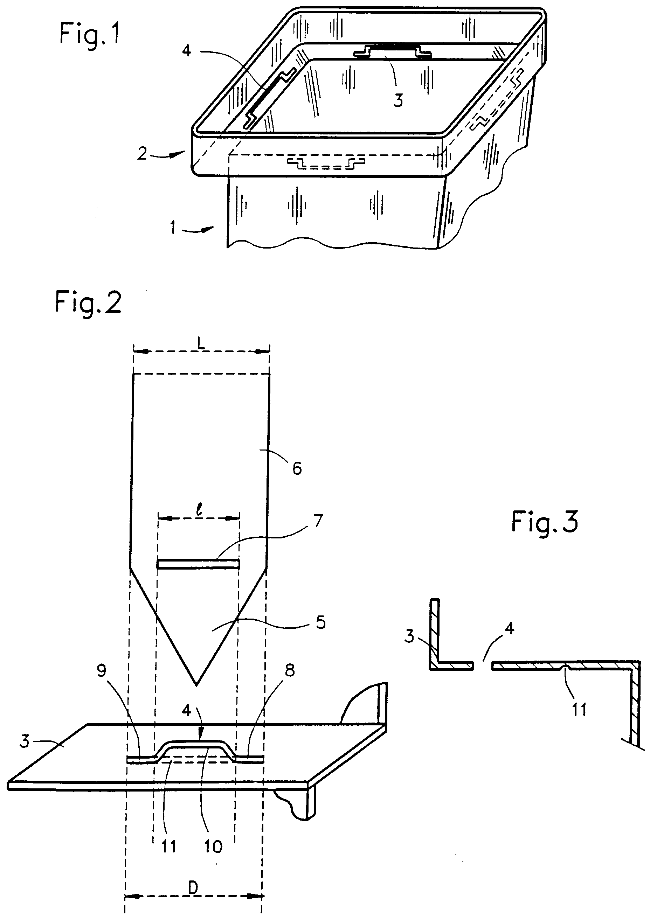

Le pot représenté sur la figure 1 comprend un corps 1, de forme prismatique, surmonté d'une corniche plate 2.

L'épaulement horizontal 3 formé entre le corps du pot et la corniche 2 est muni de fentes telles que 4 dans lesquelles on peut engager la partie pointue 5 d'une portion de bande 6 telle que celle représentée sur la figure 2.

Cette portion de bande 6, qui peut constituer une étiquette ou même une anse de portage du pot, est réalisée à partir d'une feuille en matière plastique flexible. Elle présente une forme rectangulaire et est prolongée à l'une de ses extrémités (dans le cas d'une étiquette) ou à ses deux extrémités (dans le cas d'une anse) par la portion triangulaire 5 éventuellement à pointe arrondie.

Elle comprend, sensiblement au niveau de sa jonction avec la (ou les) portion(s) triangulaire(s) 5, une encoche rectangulaire 7 qui s'étend, transversalement, dans la partie centrale de la bande 6.

Les fentes 4 dans lesquelles viennent s'engager les portions triangulaires 5 présentent ici une forme crénelée, comportant deux ailes latérales coaxiales 8, 9 et un créneau 10 sensiblement trapézoïdal à angles arrondis. La distance D comprise entre les deux extrémités de la fente 4 est sensiblement égale à la largeur L de la bande 6, tandis que la grande base du créneau 10 formé par cette fente 4 est sensiblement égale à la longueur de l'encoche 1. La largeur de l'encoche est, quant à elle, au moins égale à l'épaisseur de l'épaulement 3 du pot 1.

Comme précédemment mentionné, la fixation de la bande 6 sur le pot 1 s'obtient en introduisant la portion triangulaire 5 de la bande 6 dans la fente 4. Au cours de cet engagement, la bande 6 se déforme élastiquement pour s'adapter au contour sinueux de la fente 4, jusqu'à ce que l'encoche 7 parvienne au niveau de la partie crénelée de la fente 4 (créneau 10).

A cet instant, le créneau 10 s'engage dans l'encoche 7, tandis que la bande 6 reprend sa forme plane. Cet engagement assure un verrouillage ferme de la bande 6 qui demeure verrouillée et sans jeu dans la fente 4.

On constate que ce verrouillage présente une qualité suffisante (résistance à l'arrachement) pour que l'on puisse l'utiliser pour assurer le portage du pot, la bande 6 pouvant alors constituer une anse dont les deux extrémités viennent se verrouiller dans deux fentes respectives opposées de l'épaulement 3 du pot 1.

Dans cet exemple, l'épaulement 3 du pot 1 comprend dans sa partie inférieure, une rainure rectiligne 11 reliant les deux ailes latérales 8, 9 de la fente 4. Cette rainure 11 est destinée à recevoir et à retenir en position verrouillée le bord inférieur de l'encoche 7 formée dans la bande 6.

Bien entendu, l'invention ne se limite pas à la forme de la fente 4 représentée sur les figures 1 et 2. En effet, cette forme pourrait être arrondie et/ou comporter éventuellement plusieurs créneaux.

## Revendications

1. Dispositif pour la fixation sur un récipient (1) tel que ceux utilisés pour le conditionnement de plantes horticoles, de moyens de portage et/ou d'identification comprenant d'un côté une portion (5) présentant une forme allant en se rétrécissant selon son axe longitudinal, et une encoche transversale rectangulaire (7) réalisée dans la partie centrale desdits moyens, ledit récipient (1) comprenant une partie horizontale (3) dans laquelle est réalisée une cavité permettant l'introduction de la portion rétrécie (5) et, lors de cette introduction, la déformation élastique de cette portion (5) jusqu'à ce que l'encoche (7) vienne au niveau de la cavité, puis reprenne sa forme en provoquant l'engagement dans l'encoche d'une conformation délimitée par ladite cavité, et, en conséquence, un autoverrouillage dudit dispositif sur ledit récipient (1),
caractérisé en ce que :
- les moyens de portage et/ou d'identification consistent en une portion de bande (6) réalisée à partir d'une feuille en matière plastique flexible, et
- la susdite cavité consiste en une fente (4) comprenant deux ailes latérales rectilignes coaxiales (8, 9) reliées entre elles par une partie centrale sinueuse (10).

2. Dispositif selon la revendication 1,
caractérisé en ce que l'encoche transversale (7) est réalisée au niveau de la jonction entre la forme rétrécie (5) et le reste de la portion de bande (6).

3. Dispositif selon l'une des revendications 1 et 2,
caractérisé en ce que la susdite fente (4) est réalisée sur un épaulement (3) ou un rebord de la partie supérieure du récipient (1).

4. Dispositif selon l'une des revendications précédentes,
caractérisé en ce que la largeur de l'encoche (7) est sensiblement égale à l'épaisseur de la partie sinueuse (10).

5. Dispositif selon l'une des revendications précédentes,
caractérisé en ce que la susdite partie sinueuse (10) présente une forme sensiblement trapézoïdale à angles incurvés, et en ce que, dans ce cas, la susdite encoche (7) présente une longueur l sensiblement égale à la longueur de la grande base de ladite forme trapézoïdale.

6. Dispositif selon l'une des revendications précédentes,
caractérisé en ce que la paroi du récipient (1) sur laquelle est réalisée la fente (4) comprend au niveau de sa face inférieure, une rainure (11) reliant les deux ailes latérales rectilignes (8, 9) de la fente (4), de manière à recevoir et à maintenir le bord inférieur de l'encoche (7) en position verrouillée.

7. Dispositif selon l'une des revendications précédentes,
caractérisé en ce que la susdite portion de bande (6) constitue une étiquette.

8. Dispositif selon l'une des revendiations 1 à 6,
caractérisé en ce que la susdite portion de bande (6) constitue une anse et comprend, à chacune de ses extrémités, une forme rétrécie (5) et une encoche (7).

## Claims

1. Device for securing to a receptacle (1), such as those used for the packaging of horticultural plants, a transportation and/or identification means comprising, on one side, a portion (5) representing a shape narrowing away along its longitudinal axis, and a rectangular transversal notch (7) made in the central part of said means, said receptacle (1) comprising a horizontal part (3) in which a cavity is made enabling the narrowed portion (5) to be inserted, and also enabling, during said insertion, this portion (5) to become elastically deformed until the notch (7) reaches the level of the cavity and then resumes its shape while causing the fitting, into said notch, of a conformation delimited by said cavity, and, consequently, a self-locking of said device to said receptacle (1),
characterized in that:
- the transportation and/or identification means consists of a strip portion (6) made from a sheet of flexible plastic, and
- said cavity consists of a slot (4) comprising two coaxial rectilinear lateral wings (8, 9) joined together by a sinuous central part (10).

2. Device as claimed in claim 1,
characterized in that the transversal notch (7) is made at the level of the junction between the narrowed shape (5) and the remainder of the strip portion(6).

3. Device as claimed in either claim 1 or claim 2,
characterized in that the above-mentioned slot (4) is made in a shoulder (3) or rim of the upper part of the receptacle (1).

4. Device as claimed in any one of the previous claims,
characterized in that the width of the notch (7) is substantially equal to the thickness of the sinuous part (10).

5. Device as claimed in any one of the previous claims,
characterized in that said sinuous part (10) is of substantially trapezoid shape with curved angles, and in that, in this case, said notch (7) is of length l substantially equal to the length of the large base of said trapezoid shape.

6. Device as claimed in any one of the previous claims,
characterized in that the wall of the receptacle (1) in which the slot (4) is made comprises, on its underside, a groove (11) joining the two rectilinear lateral wings (8, 9) of the slot (4) in order to receive and maintain the lower edge of the notch (7) in the locked position.

7. Device as claimed in any one of the previous claims,
characterized in that said strip portion (6) constitutes a label.

8. Device as claimed in any one of claims 1 to 6,
characterized in that said strip portion (6) constitutes a handle and comprises, at each of its ends, a narrowed shape (5) and a notch (7).

## Patentansprüche

1. Vorrichtung zur Befestigung von Trage- und/oder Kennzeichnungsmitteln auf einem Behälter (1) von dem Typ, der z. B. zum Verpacken von Gartenbaupflanzen verwendet wird, die einerseits einen Abschnitt (5) mit entlang seiner Längsachse spitz zulaufender Form und einen rechteckigen Querschlitz (7) umfaßt, der im Mittelteil der erwähnten Mittel vorgesehen ist, wobei der Behälter (1) einen horizontalen Teil (3) umfaßt, in dem eine Aussparung vorgesehen ist, welche die Einführung des spitz zulaufenden Abschnitts (5) und mit dessen Einführung die elastische Verformung dieses Abschnittes (5) erlaubt, bis der Schlitz (7) sich auf Höhe der Aussparung befindet, dann wieder in seine Form zurückkehrt und dabei das Eingreifen einer durch die Aussparung begrenzten Struktur in den Schlitz und damit eine automatische Verriegelung der Vorrichtung auf dem Behälter (1) bewirkt,
dadurch gekennzeichnet, daß:
- die Trage- und/oder Kennzeichnungsmittel aus einem Stück Band (6) aus einer biegsamen Plastikfolie bestehen, und
- die erwähnte Aussparung aus einem Schlitz (4) besteht, der zwei rechtlinige, koaxiale Seitenflügel (8, 9) umfaßt, die durch einen kurvenförmigen Mittelteil (10) miteinander verbunden sind.

2. Vorrichtung nach Anspruch 1, dadurch gekennzeichnet, daß der Querschlitz (7) auf Höhe des Übergangs zwischen der spitz zulaufenden Form (5) und dem restlichen Bandabschnitt (6) angeordnet ist.

3. Vorrichtung nach einem der Ansprüche 1 und 2, dadurch gekennzeichnet, daß der erwähnte Schlitz (4) auf einer Schulter (3) oder einem Vorsprung des oberen Teils des Behälters (1) angeordnet ist.

4. Vorrichtung nach einem der vorhergehenden Ansprüche, dadurch gekennzeichnet, daß die Größe des Schlitzes (7) im wesentlichen der Dicke des kurvenförmigen Teils (10) entspricht.

5. Vorrichtung nach einem der vorhergehenden Ansprüche, dadurch gekennzeichnet, daß der erwähnte kurvenförmige Teil (10) im wesentlichen trapezförmig ist und abgerundete Ecken aufweist und daß in diesem Fall der erwähnte Schlitz (7) eine im wesentlichen der Länge der großen Basis der Trapezform entsprechende Länge l aufweist.

6. Vorrichtung nach einem der vorhergehenden Ansprüche, dadurch gekennzeichnet, daß die Wand des Behälters (1), in der sich der Schlitz (4) befindet, an ihrer Unterseite eine Nut (11) aufweist, welche die beiden rechtlinigen, lateralen Flügel (8, 9) des Schlitzes (4) so miteinander verbindet, daß der untere Rand des Schitzes (7) darin aufgenommen und in verriegelter Position gehalten werden kann.

7. Vorrichtung nach einem der vorhergehenden Ansprüche, dadurch gekennzeichnet, daß der erwähnte Abschnitt des Bandes (6) ein Etikett bildet.

8. Vorrichtung nach einem der Ansprüche 1 bis 6, dadurch gekennzeichnet, daß der erwähnte Abschnitt des Bandes (6) einen Henkel bildet und an jedem seiner beiden Enden eine spitz zulaufende Form (5) und einen Schlitz (7) aufweist.
